# EUROPEAN PATENT APPLICATION

(11) **EP 4 040 838 A1**
(43) Date of publication of application: **10.08.2022**
(21) Application number: 19947662.3
(22) Date of filing: 03.10.2019
(51) Int. Cl.: H04W 24/10

(54) **TERMINAL AND MEASUREMENT METHOD**

(71) Applicant: NTT DOCOMO, INC., Chiyoda-Ku Tokyo 100-6150 (JP)
(72) Inventor: TAKADA, Takuma, Tokyo 100-6150 (JP); TAKEDA, Daiki, Tokyo 100-6150 (JP)
(74) Representative: Hoffmann Eitle
(86) International application number: PCT/JP2019/039215
(87) International publication number: WO 2021/064970

(57) **Abstract**

A terminal includes a receiver that receives cell reference signals and resynchronization signals; and a controller that measures at least one resynchronization signal and also measures a cell reference signal or another resynchronization signal, by using a cell reference signal measurement gap or a resynchronization signal measurement gap.

## Description

### TECHNICAL FIELD

The present invention relates to a terminal and a measurement method for a radio communication system.

### BACKGROUND ART

For Long Term Evolution (LTE) Release 15 Category M, a resynchronization signal (RSS) has been introduced (for example, Non-Patent Document 1) for the purpose of resynchronization in time and frequency immediately after transition from a discontinuous reception (DRX) state to a non-DRX state.

Additionally, for LTE Release 16 Category M, it is has been studied to improve the measurement accuracy by using an RSS for quality measurement for the purpose of improving mobility operations.

### Related Art Document

### [Non-Patent Document]

Non-Patent Document 1: 3GPP TS 36.211 V15.6.0 (2019-06)

### SUMMARY OF THE INVENTION

### [PROBLEM TO BE SOLVED BY THE INVENTION]

Reference signal received power (RSRP) or reference signal received quality (RSRQ) of a cell reference signal (CRS) has been mainly used for quality measurement for mobility in LTE. Because an RSS has greater amounts of time and frequency resources in comparison with a PSS, an SSS, or a CRS, by using an RSS for quality measurement for mobility, it is expected that the accuracy of the quality measurement for mobility can be enhanced. However, details, such as a measurement delay or a gap, of the quality measurement for mobility using the RSS have not been specified yet.

The present invention is made in view of the above-described problem, and an object is to enhance the accuracy of quality measurement for mobility in a radio communication system.

### [MEANS FOR SOLVING THE PROBLEM]

According to the disclosed technology, there is provided a terminal including a receiver that receives cell reference signals and resynchronization signals; and a controller that measures at least one resynchronization signal and also measures a cell reference signal or another resynchronization signal, by using a cell reference signal measurement gap or a resynchronization signal measurement gap.

### [ADVANTAGE OF THE INVENTION]

According to the disclosed technology, accuracy of a quality measurement for mobility can be enhanced in a radio communication system.

### BRIEF DESCRIPTION OF DRAWINGS

Fig. 1 is a diagram illustrating an example of a configuration of a radio communication system in an embodiment of the present invention.
Fig. 2 is a diagram for illustrating an example of an RSS.
Fig. 3 is a flowchart for illustrating an example (1) of quality measurement according to an embodiment of the present invention.
Fig. 4 is a diagram illustrating an example (2) of the quality measurement according to an embodiment of the present invention.
Fig. 5 is a flowchart illustrating the example (2) of the quality measurement according to the embodiment of the present invention.
Fig. 6 is a diagram illustrating an example (3) of the quality measurement according to an embodiment of the present invention.
Fig. 7 is a flowchart illustrating the example (3) of the quality measurement according to the embodiment of the present invention.
Fig. 8 is a diagram illustrating an example (4) of the quality measurement according to an embodiment of the present invention.
Fig. 9 is a diagram illustrating an example (1) of a modified technical specification for quality measurement according to an embodiment of the present invention.
Fig. 10 is a diagram illustrating an example (2) of a modified technical specification for quality measurement according to an embodiment of the present invention.
Fig. 11 is a diagram illustrating an example of a functional configuration of a base station 10 according to an embodiment of the present invention.
Fig. 12 is a diagram illustrating an example of a functional configuration of a terminal 20 according to an embodiment of the present invention.
Fig. 13 is a diagram illustrating a hardware configuration of the base station 10 or the terminal 20 according to an embodiment of the present invention.

### [EMBODIMENTS OF THE INVENTION]

In the following, embodiments of the present invention are described by referring to the drawings. Note that the embodiments described below are an example, and embodiments to which the present invention is applied are not limited to the following embodiments.

In an operation of a radio communication system of an embodiment of the present invention, existing technology is appropriately used. Here, the existing technology is, for example, existing LTE but not limited to the existing LTE. Furthermore, the term "LTE" used in this specification has a broad meaning including LTE-Advanced and a system subsequent to LTE-Advanced (for example, NR), unless as otherwise specified.

In the embodiments of the present invention described below, terms used in the existing LTE are used, such as Synchronization signal(SS), Primary SS (PSS), Secondary SS (SSS), Physical broadcast channel (PBCH), Physical random access channel (PRACH), Physical Downlink Control Channel (PDCCH), Physical Downlink Shared Channel (PDSCH), Physical Uplink Control Channel (PUCCH), Physical Uplink Shared Channel (PUSCH), and the like. This is for convenience of description, and signals, functions, and the like, similar to these may be referred to by other names. The above-described terms in NR correspond to NR-SS, NR-PSS, NR-SSS, NR-PBCH, NR-PRACH, and the like. However, even if a signal is used for NR, the signal is not always specified as "NR-."

In the embodiments of the present invention, a duplex method may be a Time Division Duplex (TDD) method, an Frequency Division Duplex (FDD) method, or any other method (e.g., Flexible Duplex, etc.).

In the embodiments of the present invention, "configuring" a radio parameter, or the like, may be "pre-configuring" a predetermined value, or configuring a radio parameter transmitted from a base station 10 or a terminal 20.

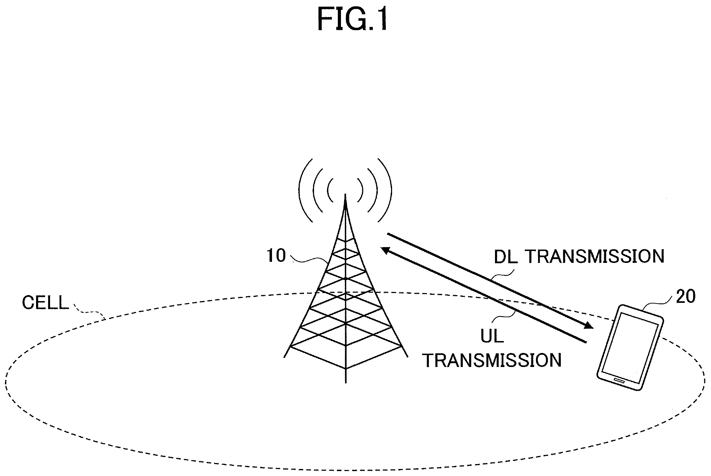

Fig. 1 is a diagram illustrating an example of a configuration of a radio communication system according to an embodiment of the present invention. As illustrated in Fig. 1, the radio communication system according to the embodiment of the present invention includes a base station 10 and a terminal 20. In Fig. 1, one base station 10 and one terminal 20 are illustrated. However, this is an example, and there may be a plurality of base stations 10 and a plurality of terminals 20.

The base station 10 provides one or more cells, and the base station 10 is a communication device for performing radio communication with the terminal 20. A physical resource of a radio signal may be defined in a time domain and a frequency domain, the time domain may be defined in terms of a number of OFDM (Orthogonal Frequency Division Multiplexing) symbols, and the frequency domain may be defined in terms of a number of subcarriers or a number of resource blocks. The base station 10 transmits a synchronization signal and system information to the terminal 20. The synchronization signal is, for example, NR-PSS and NR-SSS. The system information is transmitted, for example, on a NR-PBCH, and the system information is also referred to as broadcast information. As illustrated in Fig. 1, the base station 10 transmits a control signal or data to the terminal 20 on DL (Downlink), and the base station 10 receives a control signal or data from the terminal 20 on UL (Uplink). Each of the base station 10 and the terminal 20 can transmit and receive signals by performing beamforming. Furthermore, the base station 10 and the terminal 20 can apply MIMO (Multiple Input Multiple Output) based communication to DL or UL. Furthermore, the base station 10 and the terminal 20 may perform communication through a secondary cell (SCell: Secondary Cell) and a primary cell (PCell: Primary Cell) that are configured based on CA (Carrier Aggregation). Furthermore, the terminal 20 may perform communication through a primary cell of the base station 10 and a primary secondary cell (PSCell: Primary Secondary Cell) of another base station 10 that are configured based on DC (Dual Connectivity).

The terminal 20 is a communication device provided with a radio communication function, such as a smartphone, a cellular phone, a tablet, a wearable terminal, a communication module for M2M (Machine-to-Machine), or the like. As illustrated in FIG. 1, the terminal 20 utilizes various communication services provided by a radio communication system by receiving control signals or data in DL from the base station 10 and transmitting control signals or data in UL to the base station 10.

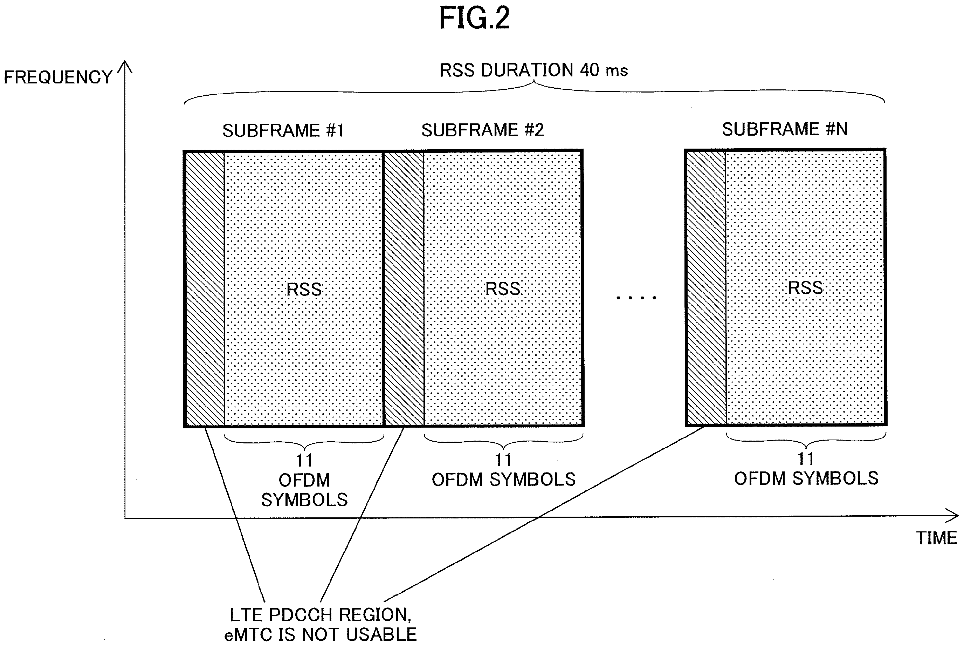

Fig. 2 is a diagram illustrating an example of RSS. A cell reference signal (CRS) is mainly used for quality measurement (e.g., reference signal received power (RSRP) and reference signal received quality (RSRQ)) for mobility in LTE. A measurement using a CRS may be referred to as a CRS-based measurement. For LTE Release 15 Category M, the resynchronization signal (RSS) illustrated in Fig. 2 has been introduced.

As illustrated in FIG. 2, for example, an RSS has a duration of 40 ms; and in each subframe, the RSS is placed in 11 OFDM symbols excluding the leading three OFDM symbols used for PDCCH. An RSS may be generated from a Gold-sequence-based sequence, and may be mapped to two physical resource blocks (PRB) by quadrature phase shift keying (QPSK) modulation. The duration of RSS may be, for example, 8 ms, 16 ms, 32 ms, or 40 ms. Furthermore, the transmission period of an RSS may be 160 ms, 320 ms, 640 ms, or 1280 ms. A notification of a frequency position, transmission periodicity, a duration, and a time offset of an RSS may be transmitted from the base station 10 to the terminal 20 via, for example, a system information block (SIB). Because an RSS has greater amounts of time and frequency resources compared with PSS and SSS, the RSS can provide time and frequency synchronization to the terminal 20 even in a short period of time.

An RSS is used, for example, for time and frequency resynchronization immediately after transition from a discontinuous reception (DRX) state to a non-DRX state. Furthermore, for LTE Release 16 Category M, it has been studied to enhance the measurement accuracy by using the RSS for quality measurement for the purpose of improving mobility operation. A measurement using an RSS may be referred to as an RSS-based measurement.

In LTE Release 16, introduction of an RSS has been studied, as a function using a new configuration method. In the RSS configuration method in LTE Release 16, for example, parameters 1) through 5) below may be used.
1) ce-rss-periodicity-config: RSS periodicity {160, 320, 640, 1280} ms
2) ce-rss-duration-config: RSS duration {8, 16, 32, 40} subframes
3) ce-rss-freqPos-config: RSS frequency position (lowest physical resource block number)
4) ce-rss-timeOffset-config: RSS time offset (number of radio frames)
5) ce-rss-powerBoost-config: power offset for LTE-CRS {0, 3, 4, 8, 6} dB

Here, user equipment (UE) operations related to RSS-based measurement have not been specified. For example, the measurement delay and the maximum number of measurable RSSs have not been specified.

Regarding a measurement gap configuration, it is not specified whether a measurement gap is always used for an RSS-based measurement similar to a CRS-based measurement. In a case where a measurement gap is necessary, it is not specified whether an already-defined measurement gap is commonly used or a new measurement gap for an RSS-based measurement is used. Furthermore, it is not specified whether to perform a measurement (inter-frequency measurement) of a different frequency in a cell other than the serving cell.

For example, in the case of an already-defined CRS-based measurement for category M, even if a measurement (intra-frequency measurement) of the same frequency is configured, there is a possibility that the terminal 20 is receiving PDSCH by applying frequency hopping, so that the terminal 20 may unable to receive a PSS and an SSS of a target cell, such as a neighboring cell. Accordingly, during the CRS-based measurement, it is assumed to retune to the frequency of the PSS and the SSS by always using a measurement gap. Regarding the measurement delay, when, for example, the measurement gap period is 40 ms and the number of required samples is 5, 40 ms x 5 samples = 200 ms becomes the measurement delay.

For the above reasons, UE operations are clarified taking into account existing measurement operations such as the CRS-based measurement so that the RSS-based measurement can be appropriately configured for a category M terminal from the network. For example, as a method for defining RSS-based measurement, a method of configuring a measurement gap, inter-frequency measurement in a cell other than the serving cell, operations when a CRS-based measurement and an RSS-based measurement overlap in time domain, and a method of determining the number of simultaneously-measurable RSSs are specified in the embodiments of the present invention.

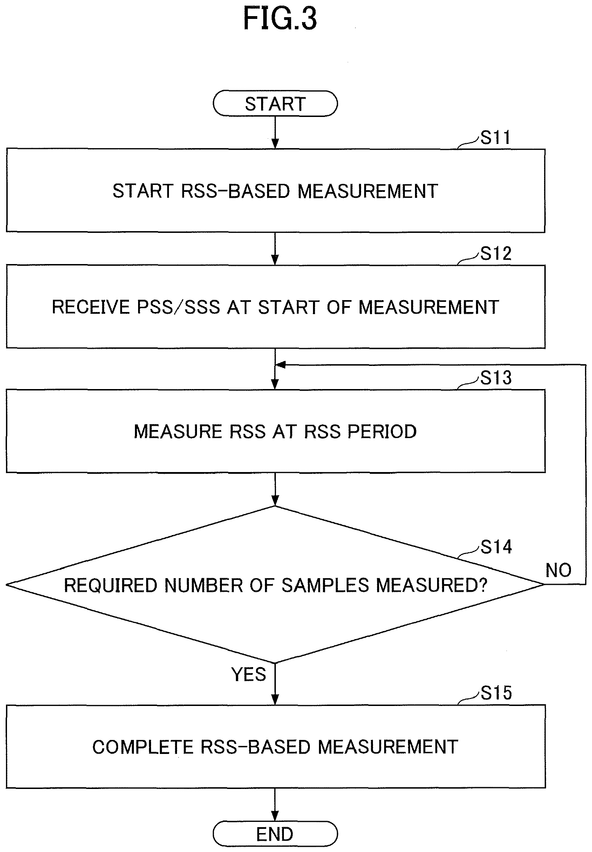

Fig. 3 is a flowchart illustrating an example (1) of quality measurement according to an embodiment of the present invention. The flowchart of Fig. 3 illustrates an example of quality measurement operations when a measurement gap repetition period (MGRP) is 40 ms, a measurement gap length (MGL) is 6 ms, and an RSS period is 40 ms. The measurement gap configured in Fig. 3 may be separately configured for the RSS-based measurement, or a measurement gap configured for a CRS-based measurement may be used.

At step S11, the terminal 20 starts an RSS-based measurement. Subsequently, the terminal 20 receives PSS/SSS at the start of the measurement (S12). Here, the PSS/SSS may indicate PSS and an SSS, or PSS or SSS. An operation for receiving PSS/SSS at the start of measurement may be performed as in step S12, and the configured measurement of RSS may be started thereafter.

Here, for example, a measurement delay may be specified by (RSS period or measurement gap repetition period) x (number of samples required for measurement + n). Here, n corresponds to an amount of time necessary to receive PSS/SSS. Alternatively, a measurement delay may be specified by (RSS period or measurement gap repetition period) x (number of samples required for measurement) + X ms. X ms corresponds to a time necessary to receive PSS/SSS. When a frequency position of an RSS is configured by the network to encompass PSS/SSS, a measurement of the RSS may be started from the start of the RSS-based measurement without performing step S12. When step S12 is not performed, the measurement delay may be specified by (RSS period or measurement gap repetition period) x (number of samples required for measurement).

At step S13, the terminal 20 measures the RSS at the measurement gap repetition period or the RSS period. In the example of Fig. 3, because the measurement gap repetition period is the same as the RSS period, the RSS can be measured at every measurement gap. At step S14, the terminal 20 determines whether a required number of samples have been measured. When the required number of samples have been measured (YES at S14), the process proceeds to step S15. When the required number of samples have not been measured (NO at S14), the process proceeds to step S13. At step S15, the terminal 20 completes the RSS-based measurement and ends the process.

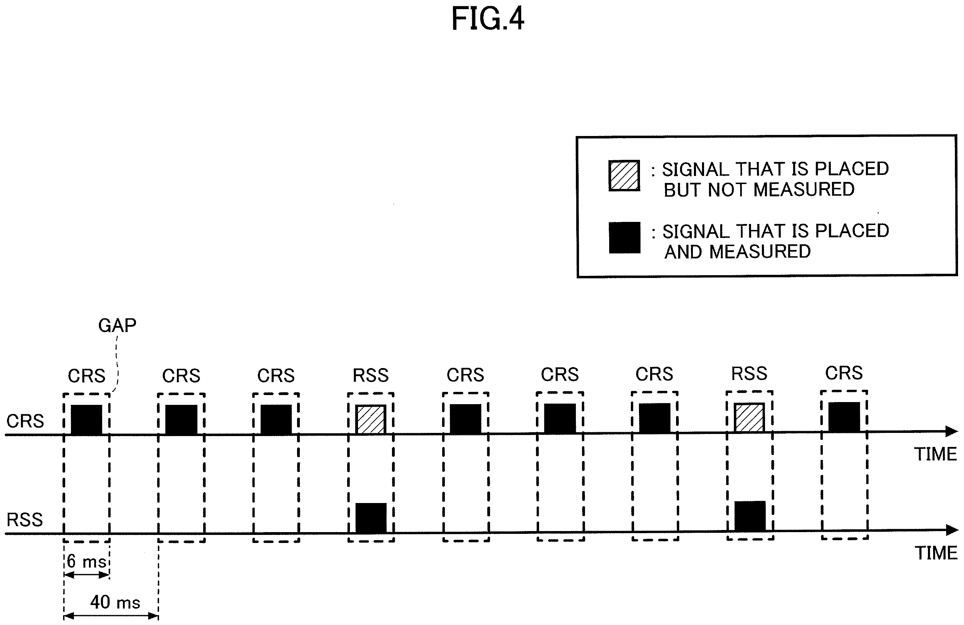

Fig. 4 is a diagram illustrating an example (2) of quality measurement according to an embodiment of the present invention. Fig. 4 illustrates an example of quality measurement operations when the measurement gap repetition period (MGRP) is 40 ms, the measurement gap length (MGL) is 6 ms, and the RSS period is 160 ms. As the measurement gap illustrated in Fig. 4, a measurement gap configured for a CRS-based measurement may be used.

As illustrated in Fig. 4, when an RSS is not placed in the measurement gap, a CRS may be measured. Furthermore, as illustrated in Fig. 4, when a CRS and an RSS are placed in the measurement gap, the RSS may be measured.

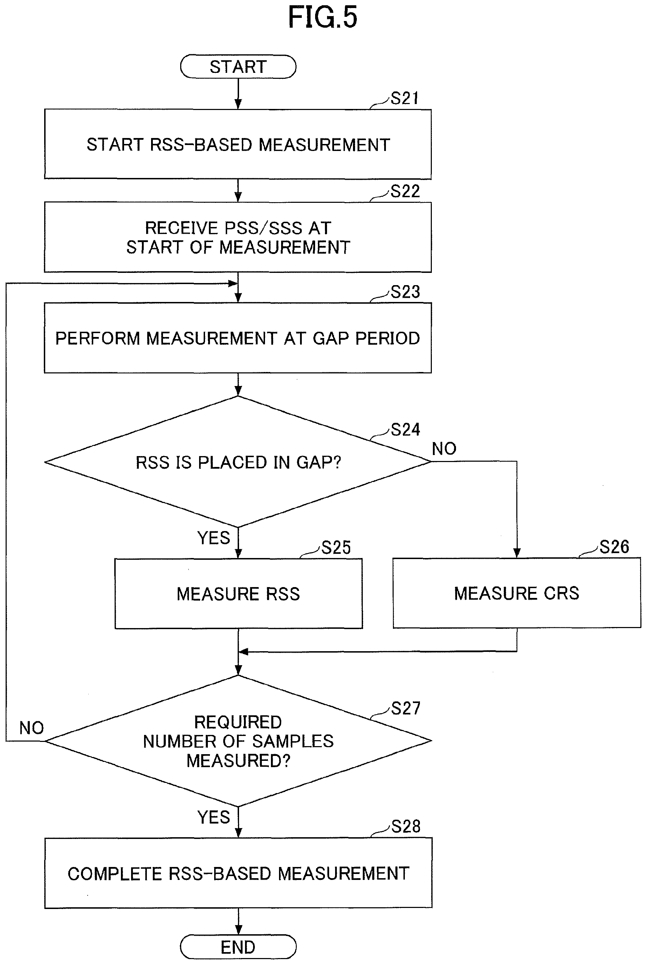

Fig. 5 is a flowchart illustrating an example (2) of a quality measurement according to an embodiment of the present invention. The flowchart of Fig. 5 is an example of performing the quality measurement illustrated in Fig. 4.

At step S21, the terminal 20 starts an RSS-based measurement. Subsequently, the terminal 20 receives PSS/SSS at the start of the measurement (S22). Similar to step S12, step S22 may be performed as necessary or need not be performed.

At step S23, the terminal 20 performs a measurement at the measurement gap repetition period. Subsequently, the terminal 20 determines whether an RSS is placed in the measurement gap. When an RSS is placed in the measurement gap (YES at S24), the process proceeds to step S25. When an RSS is not placed in the measurement gap (NO at S24), the process proceeds to step S26. At step S25, the terminal 20 measures the RSS. In contrast, at step S26, the terminal 20 measures a CRS.

At step S27, the terminal 20 determines whether a required number of samples have been measured. When the required number of samples have been measured (YES at S27), the process proceeds to step S28. When the required number of samples have not been measured (NO at S27), the process proceeds to step S23. At step S28, the terminal 20 completes the RSS-based measurement and ends the process.

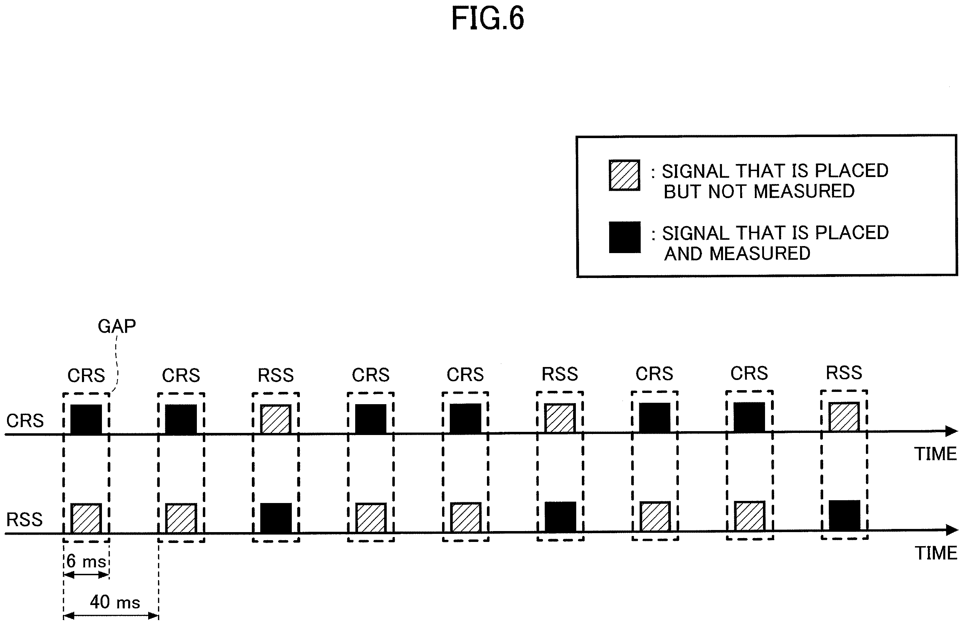

Fig. 6 is a diagram illustrating an example (3) of a quality measurement according to an embodiment of the present invention. Fig. 6 illustrates an example of quality measurement operations when the measurement gap repetition period (MGRP) is 40 ms, the measurement gap length (MGL) is 6 ms, and the RSS period is 40 ms. As the measurement gap illustrated in Fig. 6, a measurement gap configured for a CRS-based measurement may be used.

As illustrated in Fig. 6, when a CRS and an RSS are placed in each measurement gap, CRSs and RSSs may be measured at a predetermined ratio. Fig. 6 is an example where CRSs and RSSs are measured at a ratio of 2:1. The ratio of CRSs and RSSs to be measured may be configured by the network or predefined.

As illustrated in Fig. 4 and Fig. 6, when the arrangement of the CRS and the arrangement of the RSS partially overlap each other, a measurement may be performed as in Fig. 4; and when the arrangement of the CRS and the arrangement of the RSS completely overlap each other, a measurement may be performed as in Fig. 6. That is, the measurement operation may be changed depending on whether the arrangement of the CRS and the arrangement of the RSS overlap partially or completely.

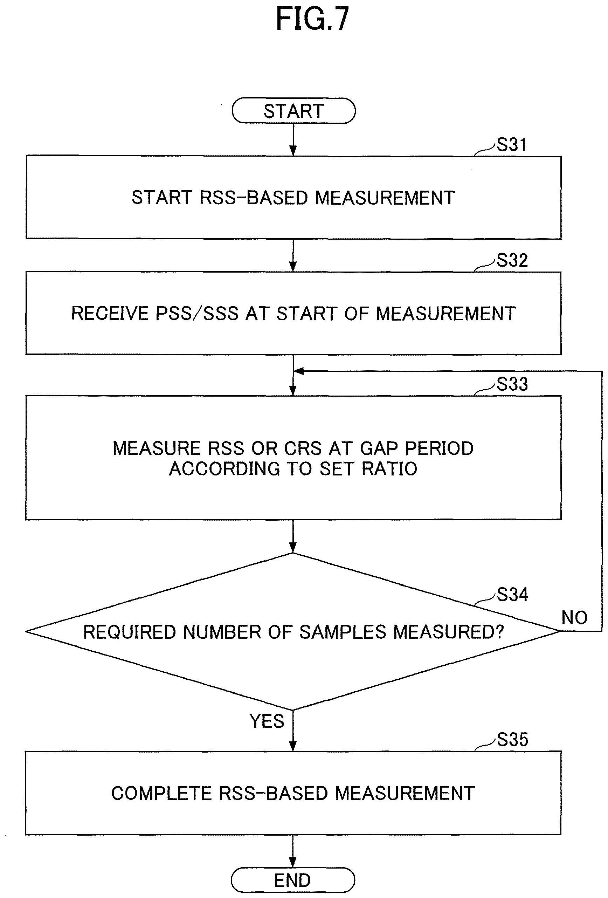

Fig. 7 is a flowchart illustrating the example (3) of a quality measurement according to an embodiment of the present invention. The flowchart of Fig. 7 is an example of performing the quality measurement illustrated in Fig. 6.

At step S31, the terminal 20 starts an RSS-based measurement. Subsequently, the terminal 20 receives PSS/SSS at the start of the measurement (S32). Similar to step S12, step S32 may be performed as necessary or may not be performed.

At step S33, the terminal 20 measures either an RSS or a CRS at the measurement gap repetition period according to the set ratio. For example, because the ratio CRS:RSS is 2:1 in the example of Fig. 6, CRSs are measured at two measurement gaps and an RSS is measured at one measurement gap in three consecutive measurement gaps.

At step S34, the terminal 20 determines whether a required number of samples have been measured. When the required number of samples have been measured (YES at S34), the process proceeds to step S28. When the required number of samples have not been measured (NO at S34), the process proceeds to step S35. At step S35, the terminal 20 completes the RSS-based measurement and ends the process.

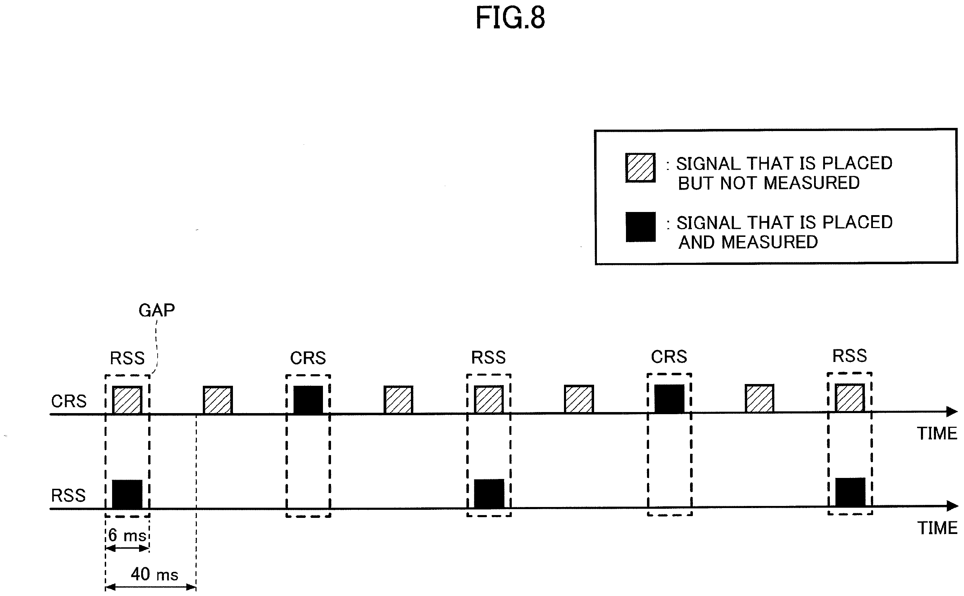

Fig. 8 is a diagram illustrating an example (4) of a quality measurement according to an embodiment of the present invention. Fig. 8 illustrates an example of quality measurement operations when the measurement gap repetition period (MGRP) is 80 ms, the measurement gap length (MGL) is 6 ms, and the RSS period is 160 ms. As the measurement gap illustrated in Fig. 8, a measurement gap configured for an RSS-based measurement may be used.

As illustrated in Fig. 8, a CRS may be measured when a RSS is not placed in a measurement gap. Furthermore, as illustrated in Fig. 8, when a CRS and an RSS are placed in a measurement gap, the RSS may be measured.

Here, an RSS-based measurement may be performed without configuring a measurement gap. When an RSS to be measured is included in a frequency band being used, an RSS-based measurement may be performed without configuring a measurement gap. Furthermore, when an RSS to be measured is included in a frequency band being used, the terminal 20 need not use a measurement gap even if the measurement gap is configured.

When performing an inter-frequency measurement using an RSS, the terminal 20 may apply some or all of the RSS-based measurement methods described with reference to Fig. 3 through Fig. 8 to the inter-frequency measurement.

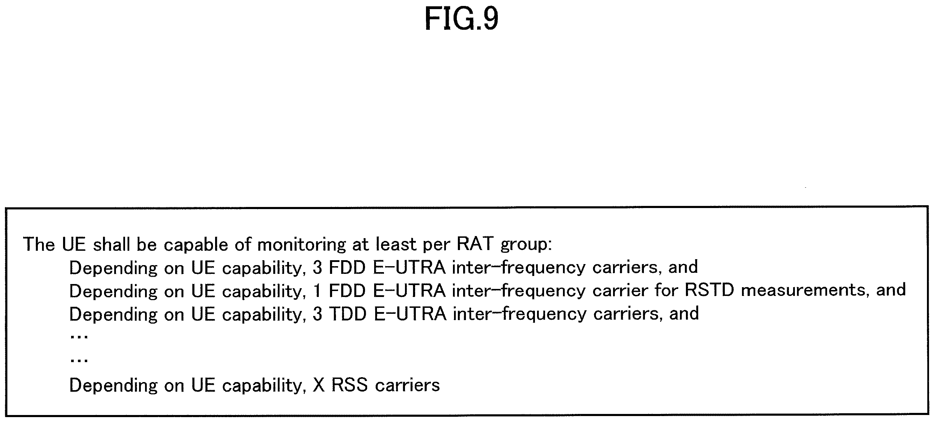

Fig. 9 is a diagram illustrating an example (1) of a modified technical specification for quality measurement according to an embodiment of the present invention. As illustrated in Fig. 9, as UE capability, in addition to the number of simultaneously-measurable cells and carriers for a CRS-based measurement, the number of simultaneously-measurable RSSs for an RSS-based measurement may be added.

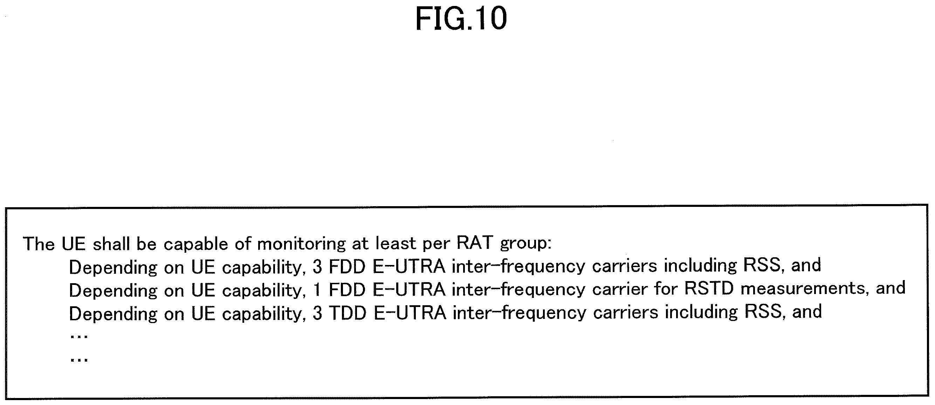

Fig. 10 is a diagram illustrating an example (2) of a modification of a technical specification for a quality measurement according to an embodiment of the present invention. As illustrated in Fig. 10, as UE capability, the number of carriers corresponding to the number of simultaneously-measurable RSSs for an RSS-based measurement may be added by diverting the number of simultaneously-measurable carriers defined for a CRS-based measurement.

The above-described embodiments may be defined as an operation for NR, or may be defined as an operation performed when there is an overlapping operation other than the CRS-based measurement. For example, in the case of NR, the above-described embodiments may be defined as an RSS-based measurement performed when there is overlapping an SS/PBCH block (SSB) based measurement. That is, in the above-described embodiments, a measurement gap for a CRS may be replaced with a measurement gap for an SSB.

According to the above-described embodiments, the terminal 20 can perform an RSS-based measurement for measuring at least an RSS by using a measurement gap for a CRS or a measurement gap for an RSS.

That is, in a radio communication system, accuracy of quality measurement for mobility can be enhanced.

### (Device Configurations)

Next, examples of functional configurations of the base station 10 and the terminal 20 for executing the above-described processing and operation are described. The base station 10 and the terminal 20 include functions for executing the above-described embodiments. However, each of the base station 10 and the terminal 20 may only provide with a part of the functions in the embodiments.

### <Base station 10>

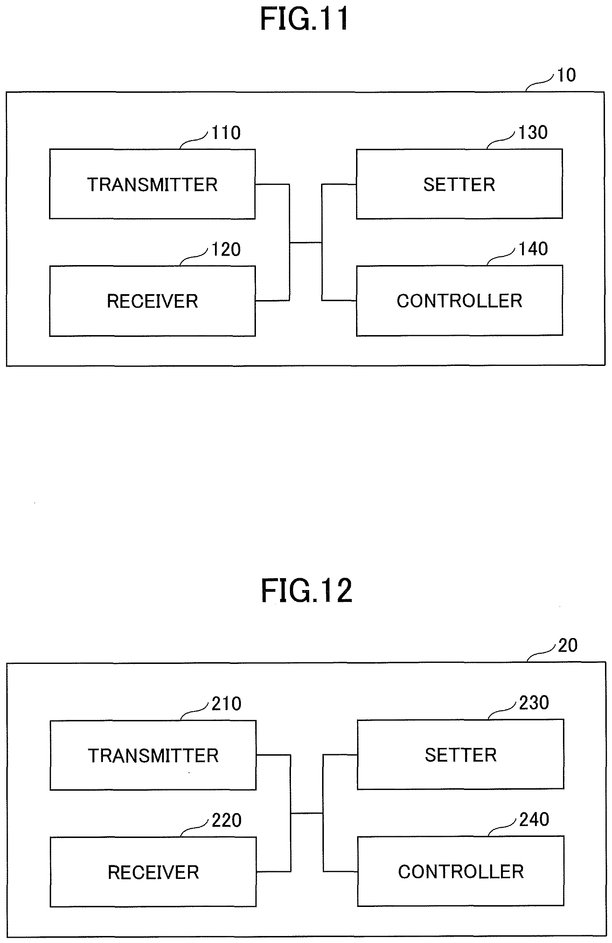

Fig. 11 is a diagram illustrating an example of a functional configuration of the base station 10 in an embodiment of the present invention. As illustrated in Fig. 11, the base station 10 includes a transmitter 110; a receiver 120; a setter 130; and a controller 140. The functional configuration illustrated in Fig. 11 is merely an example. Functional division and names of functional units may be any division and names, provided that operation according to the embodiments of the present invention can be executed.

The transmitter 110 includes a function for generating a signal to be transmitted to the terminal 20 and transmitting the signal through radio. The transmitter 110 transmits an inter network node message to another network node. The receiver 120 includes a function for receiving various signals transmitted from the terminal 20 and retrieving, for example, information of a higher layer from the received signals. The transmitter 110 has a function to transmit NR-PSS, NR-SSS, NR-PBCH, DL/UL control signals, and the like, to the terminal 20. The receiver 120 receives an inter network node message from another network node.

The setter 130 stores preconfigured configuration information and various types of configuration information to be transmitted to the terminal 20. Content of the configuration information is, for example, configuration on an RSS in the terminal 20 and the like.

As described in the embodiments, the controller 140 performs control on transmission of an RSS and control of a measurement of an RSS. A functional unit related to signal transmission in the controller 140 may be included in the transmitter 110, and a functional unit related to signal reception in the controller 140 may be included in the receiver 120.

### <Terminal 20>

Fig. 12 is a diagram illustrating an example of a functional configuration of a terminal 20 according to an embodiment of the present invention. As illustrated in Fig. 12, the terminal 20 includes a transmitter 210; a receiver 220; a setter 230; and a controller 240. The functional configuration illustrated in Fig. 12 is only one example. The functional division and the names of the names of the functional units may be any division and names, provided that operations of the embodiments of the present invention can be executed.

The transmitter 210 creates a transmission signal from transmission data and transmits the transmission signal through radio. The receiver 220 receives various signals through radio and retrieves higher layer signals from the received physical layer signals. The receiver 220 has a function to receive NR-PSS, NR-SSS, NR-PBCH, DL/UL/SL control signals, etc., transmitted from the base station 10. For example, the transmitter 210 transmits PSCCH (Physical Sidelink Control Channel), PSSCH (Physical Sidelink Shared Channel), PSDCH (Physical Sidelink Discovery Channel), PSBCH (Physical Sidelink Broadcast Channel), and the like to another terminal 20 as D2D communication, and the receiver 220 receives PSCCH, PSSCH, PSDCH, PSBCH, and the like from another terminal 20.

The setter 230 stores various types of configuration information received from the base station 10 by the receiver 220. The setter 230 also stores preconfigured configuration information. The content of the configuration information is, for example, a configuration on an RSS, and the like.

As described in the embodiments, the controller 240 performs control for receiving an RSS and control for an RSS based measurement. A functional unit related to signal transmission in the controller 240 may be included in the transmitter 210, and a functional unit related to signal reception in the controller 240 may be included in the receiver 220.

### (Hardware configuration)

The block diagrams (Fig. 11 and Fig. 12) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices.

Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

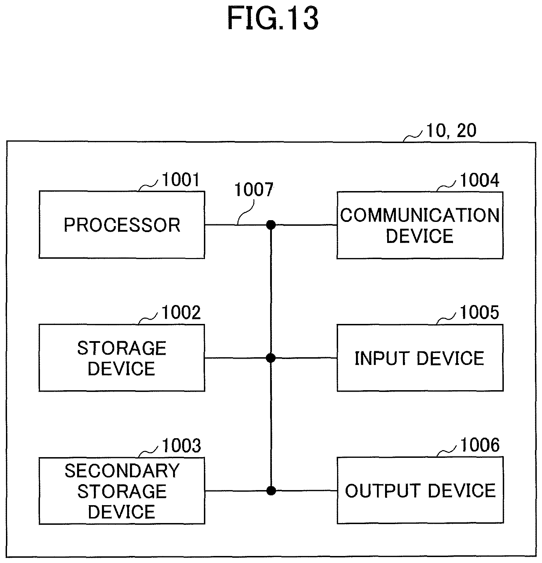

For example, the base station 10, the terminal 20, or the like in an embodiment of the present invention may function as a computer for performing a process of the radio communication method according to the present disclosure. Fig. 13 is a diagram illustrating an example of a hardware configuration of the base station 10 and the terminal 20 according to an embodiment of the present disclosure. Each of the base station 10 and the terminal 20 described above may be physically configured as a computer device including a processor 1001, a storage device 1002, a secondary storage device 1003, a communication device 1004, an input device 1005, an output device 1006, a bus 1007, and the like.

In the following description, the term "device" can be replaced with a circuit, device, unit, or the like. The hardware configuration of each of the base station 10 and the terminal 20 may be configured to include each device depicted, or may be configured without including some devices.

Each function in each of the base station 10 and the terminal 20 is implemented such that predetermined software (program) is read on hardware such as the processor 1001, the storage device 1002 and the like, and the processor 1001 performs an operation and controls communication by the communication device 1004 and at least one of reading and writing of data in the storage device 1002 and the secondary storage device 1003.

For example, the processor 1001 operates an operating system and controls the entire computer. The processor 1001 may be configured with a central processing unit (CPU) including an interface with a peripheral device, a control device, an operation device, a register, and the like. For example, the above-described controller 140, the controller 240, and the like may be implemented by the processor 1001.

Furthermore, the processor 1001 reads a program (program code), a software module, data, or the like from at least one of the secondary storage device 1003 and the communication device 1004 out to the storage device 1002, and executes various types of processes according to them. A program causing a computer to execute at least some of the operations described in the above embodiments is used as the program. For example, the controller 140 of the base station 10 illustrated in Fig. 11 may be implemented by a control program which is stored in the storage device 1002 and operates on the processor 1001. Furthermore, for example, the controller 240 of the terminal 20 illustrated in Fig. 12 may be implemented by a control program which is stored in the storage device 1002 and operates on the processor 1001. Various types of processes are described to be executed by one processor 1001 but may be executed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The secondary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The above-described storage medium may be, for example, a database, a server, or any other appropriate medium including at least one of the storage device 1002 and the secondary storage device 1003.

The communication device 1004 is hardware (a transmitting and receiving device) for performing communication between computers via at least one of a wired network and a wireless network and is also referred to as a "network device," a "network controller," a "network card," a "communication module," or the like. The communication device 1004 may be configured to include a high frequency switch, a duplexer, a filter, a frequency synthesizer, and the like to implement at least one of frequency division duplex (FDD) and time division duplex(TDD). For example, transmitting and receiving antennas, an amplifier, a transceiver, a transmission line interface, and the like may be implemented by the communication device 1004. The transceiver may be implemented such that a transmitter and a receiver are physically or logically separated.

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the storage device 1002 are connected by the bus 1007 to communicate information with each other. The bus 1007 may be configured with a single bus or may be configured with different buses between the devices.

Furthermore, each of the base station 10 and the terminal 20 may be configured to include hardware such as a microprocessor, a digital signal processor (DSP), an application specific integrated circuit (ASIC), a programmable logic device (PLD), or a field programmable gate array (FPGA), or all or some of the functional blocks may be implemented by hardware. For example, the processor 1001 may be implemented by at least one of these pieces of hardware.

### (Conclusion of the embodiments)

As described above, according to the embodiments of the present invention, there is provided a terminal including a receiver that receives cell reference signals and resynchronization signals, and a controller that measures at least one resynchronization signal and also measures a cell reference signal or a resynchronization signal, by using a cell reference signal measurement gap or a resynchronization signal measurement gap.

The above configuration enables the terminal 20 to perform an RSS-based measurement for measuring at least an RSS by using a measurement gap for a CRS or a measurement gap for an RSS. That is, accuracy of a quality measurement for mobility can be enhanced in a radio communication system.

The controller may receive a synchronization signal at the start of measurement. With this configuration, the terminal 20 can enhance the accuracy of the measurement by receiving PSS/SSS at the start of the RSS-based measurement.

A delay in the measurement may include a time period for receiving the synchronization signal at the start of measurement. With this configuration, the terminal 20 can enhance the accuracy of the measurement by receiving the PSS/SSS at the start of the RSS-based measurement.

The controller may measure the resynchronization signal by using the cell reference signal measurement gap when the resynchronization signal is placed in the cell reference signal measurement gap, and the controller may measure the cell reference signal when the resynchronization signal is not placed in the cell reference signal measurement gap. With this configuration, the terminal 20 can enhance the accuracy of the measurement by measuring an RSS or an CRS at the start of the RSS-based measurement by commonly using the measurement gap for the CRS.

The controller may measure cell reference signals and resynchronization signals at a configured or predefined ratio between the cell reference signals and the resynchronization signals by using the cell reference signal measurement gap. With this configuration, the terminal 20 can enhance the accuracy of the measurement by measuring RSSs and CRSs at a predetermined ratio by commonly using the measurement gap for CRSs at the start of RSS-based measurement.

The controller may be capable of simultaneously measuring resynchronization signals up to the number of simultaneously-measurable resynchronization signals that is defined as a UE capability. With this configuration, the terminal 20 can simultaneously measure multiple RSSs during the RSS-based measurement.

Furthermore, according to the embodiments of the present invention, there is provided a measurement method performed by a terminal. The measurement method includes receiving cell reference signals and resynchronization signals, and measuring at least one resynchronization signal and also measuring a cell reference signal or a resynchronization signal, by using a cell reference signal measurement gap or a resynchronization signal measurement gap.

The above configuration enables the terminal 20 to perform an RSS-based measurement for measuring at least an RSS by using a measurement gap for a CRS or a measurement gap for an RSS. That is, accuracy of a quality measurement for mobility can be enhanced in a radio communication system.

### (Supplemental embodiment)

The embodiments of the present invention are described above, but the disclosed invention is not limited to the above embodiments, and those skilled in the art would understand various modified examples, revised examples, alternative examples, substitution examples, and the like. In order to facilitate understanding of the invention, specific numerical value examples are used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (as long as there is no contradiction). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station 10 and the terminal 20 are described using the functional block diagrams, but such devices may be implemented by hardware, software, or a combination thereof. Software executed by the processor included in the base station 10 according to the embodiment of the present invention and software executed by the processor included in the terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any other appropriate storage medium.

Furthermore, a notification of information is not limited to the aspect or embodiment described in the present disclosure and may be provided by any other method. For example, the notification of information may be given by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in this specification may be reversed in order provided that there is no contradiction. For example, the method described in the present disclosure presents elements of various steps with an exemplary order and is not limited to a presented specific order.

In this specification, a specific operation to be performed by the base station 10 may be performed by an upper node in some cases. In the network including one or more network nodes including the base station 10, various operations performed for communication with the terminal 20 can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW).

Information, a signal, or the like described in the present disclosure may be output from a higher layer (or a lower layer) to a lower layer (or a higher layer layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination in the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in the present disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS)," "radio base station," "base station device," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the terminal is replaced with communication between a plurality of terminals 20 (for example, which may be referred to as device-to-device (D2D) or vehicle-to-everything (V2X)). In this case, the terminal 20 may have the functions of the base station 10 described above. Further, the terms "uplink" and "downlink" may be replaced with terms (for example, "side") corresponding to inter-terminal communication. For example, an uplink channel, a downlink channel, or the like may be replaced with side channels.

Similarly, the user terminal in the present disclosure may be replaced with the base station. In this case, the base station may have the functions of the above-mentioned user terminal.

The terms "determination(determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case of using in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Furthermore, "means" in the configuration of each of the above devices may be replaced with "unit," "circuit," "device," or the like.

When "include," "including," and variations thereof are used in the present disclosure, these terms are intended to be comprehensive, similar to a term "provided with (comprising)." Further, the term "or" used in the present disclosure is intended not to be an exclusive OR.

A radio frame may include one or more frames in the time domain. In the time domain, each of one or more frames may be referred to as a subframe. The subframe may further include one or more slots in the time domain. The subframe may have a fixed time length (for example, 1 ms) not depending on numerology.

The numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a transmission time interval (TTI: Transmission Time Interval), or a plurality of consecutive subframes may be referred to as TTIs, or one slot or one mini slot may be referred to as a TTI. In other words, at least one of the subframe and the TTI may be a subframe (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the subframe.

Here, for example, the TTI refers to a minimum time unit of scheduling in radio communication. For example, in the LTE system, the base station performs scheduling of allocating a radio resource (a frequency bandwidth, a transmission power, or the like which can be used in each terminal 20) to each terminal 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is provided, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) forming the minimum time unit of scheduling may be controlled.

A TTI having a time length of 1 ms may be referred to as a common TTI (TTI in LTE Rel. 8 to 12), a normal TTI, a long TTI, a common subframe, a normal subframe, a long subframe, a slot, or the like. A TTI shorter than the common TTI may be referred to as a reduced TTI, a short TTI, a partial TTI (a partial or fractional TTI), a reduced subframe, a short subframe, a mini slot, a sub slot, a slot, or the like.

Furthermore, a long TTI (for example, a normal TTI, a subframe, or the like) may be replaced with a TTI having a time length exceeding 1 ms, and a short TTI (for example, a reduced TTI or the like) may be replaced with a TTI having a TTI length that is less than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same irrespective of a numerology and may be, for example, 12. The number of subcarriers included in an RB may be determined based on a numerology.

Furthermore, a time domain of an RB may include one or more symbols and may be a length of one slot, one mini slot, one subframe, or one TTI. One TTI, one subframe, or the like may be formed of one or more resource blocks.

Furthermore, one or more RBs may be referred to as a physical resource block (PRB), a sub carrier group (SCG), a resource element group (REG), a PRB pair, an RB pair, or the like.

Furthermore, the resource block may be formed of one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and the UE need not assume that predetermined signals/channels are transmitted and received outside an active BWP. Furthermore, a "cell," a "carrier," or the like in the present disclosure may be replaced with a "BWP."

Structures of the radio frame, the sub frame, slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, a symbol length, a cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from C." Terms such as "separated," "coupled," or the like may also be interpreted similarly to "different."

Each aspect/embodiment described in this specification may be used alone, in combination, or may be switched in accordance with the execution. Furthermore, notification of predetermined information (for example, notification of "being X") is not limited to notification performed explicitly, but may be performed implicitly (for example, not notifying the predetermined information).

In the present disclosure, the CRS is an example of a cell reference signal. The RSS is an example of a resynchronization signal. The PSS/SSS is an example of a synchronization signal.

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### LIST OF REFERENCE SYMBOLS

10 base station
110 transmitter
120 receiver
130 setter
140 controller
20 terminal
210 transmitter
220 receiver
230 setter
240 controller
1001 processor
1002 storage device
1003 secondary storage device
1004 communication device
1005 input device
1006 output device

## Claims

1. A terminal comprising:
a receiver that receives cell reference signals and resynchronization signals; and
a controller that measures at least one resynchronization signal and also measures a cell reference signal or another resynchronization signal, by using a cell reference signal measurement gap or a resynchronization signal measurement gap.

2. The terminal according to claim 1, wherein the controller receives a synchronization signal at a start of the measurement.

3. The terminal according to claim 2, wherein a delay in the measurement includes a time period for receiving the synchronization signal at the start of measurement.

4. The terminal according to claim 1, wherein the controller measures the resynchronization signal by using the cell reference signal measurement gap when the resynchronization signal is placed in the cell reference signal measurement gap, and the controller measures the cell reference signal when the resynchronization signal is not placed in the cell reference signal measurement gap.

5. The terminal according to claim 1, wherein the controller measures cell reference signals and resynchronization signals at a configured or predefined ratio between the cell reference signals and the resynchronization signals, by using the cell reference signal measurement gap.

6. The terminal according to claim 1, wherein the controller is capable of simultaneously measuring resynchronization signals up to a number of simultaneously-measurable resynchronization signals that is defined as a UE capability.

7. A measurement method performed by a terminal, the measurement method comprising:
receiving cell reference signals and resynchronization signals; and
measuring at least one resynchronization signal and also measuring a cell reference signal or another resynchronization signal, by using a cell reference signal measurement gap or a resynchronization signal measurement gap.
